# EUROPEAN PATENT APPLICATION

(11) **EP 2 466 856 A1**
(43) Date of publication of application: **20.06.2012**
(21) Application number: 10807884.1
(22) Date of filing: 22.04.2010
(51) Int. Cl.: H04L 29/12

(54) **SERVICE REALIZING METHOD AND SERVICE SYSTEM**

(30) Priority: 10.08.2009 CN 200910163675
(71) Applicant: ZTE Corporation, Shenzhen, Guangdong 518057 (CN)
(72) Inventor: WANG, Jun, Shenzhen Guangdong 518057 (CN); MA, Suan, Shenzhen Guangdong 518057 (CN)
(74) Representative: Sander Jakobsson, Sofia Ellinor
(86) International application number: PCT/CN2010/072067
(87) International publication number: WO 2011/017939

(57) **Abstract**

A method for implementing a service and a service system, wherein the method includes: storing a service node address of a service in a peer-to-peer (P2P) node corresponding to a service identifier of the service in a P2P overlay network; a user equipment sending a service request including the service identifier to the P2P overlay network after acquiring the service identifier; a P2P node in the P2P overlay network receiving the service request sent by the user equipment, then acquiring the service node address from the P2P overlay network according to the service identifier and sending the service request to a corresponding service node according to the service node address. The service system includes a user equipment, a service node and a P2P overlay network. The present invention stores the service node address in the P2P overlay network and the P2P overlay network forwards the service request sent by the user equipment to the corresponding service node according to the service node address, which provides service routing based on the P2P overlay network.

## Description

### Technical Field

The present invention relates to the field of communication, and in particular, to a method and for implementing a service and a service system.

### Background of the Related Art

In the existing communication network, the voice service in the circuit switched domain or the service based on the session initiation protocol (SIP) in the IP multimedia subsystem (IMS) network is controlled by the core network. The core network can take charge of authentication, authorization and charging of the user and routing of the service, which well ensures the operationality and the manageability of the service. However, the non-SIP service is commonly that the client directly accesses the server of the service provider to obtain the services in the internet.

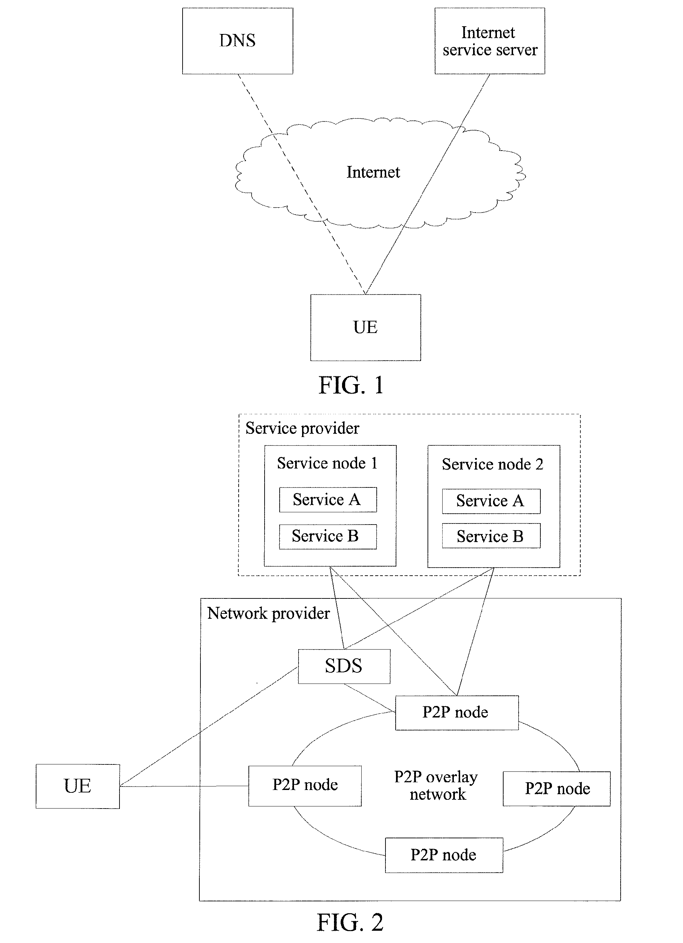

FIG. 1 is a structural diagram of the internet service system in the related art; as shown in FIG. 1, the domain name system (DNS) protocol is run between the user equipment (UE) and the DNS server and the UE transforms the domain of the internet service into the corresponding Internet protocol (IP) address by the DNS protocol; and then the UE uses this IP address to directly communicate with the internet service server and runs the required interface protocols, such as the hyper text transfer protocol (HTTP), etc., of the service

When using the framework shown in FIG. 1 to provide services, the network provider cannot control the service process. Furthermore, the internet service provider normally lacks the marketing channel and the charging channel close to the terminal users, so there are some problems in aspects, such as business promotion and profit models, etc.. A network in which the network provider controls the service and provides the service routing services can be built using the more successful operation experience of the short message service provider (SP) at present, and both the SIP service and the non-SIP service can all be routed and controlled by the network, wherein the network provider performs the charging and cost collection to the service.

However, when building the network in which the network provider controls the service and provides the service routing services using the related art, following problems exist:
(1) normally the traffic of the internet service is relatively large, and the cost for the core server with the traditional static topological structure performing access control to the internet service is very high;
(2) when extensively (e.g., nationwide) deploying and operating the services, both the area access hotspot and the service hotspot exist in the service access, however, the static topology cannot implement the effective load balance in the whole network;
(3) when the amount of service access is relatively large and more than one servers are required to provide services, the related art normally uses the static load balance method based on the DNS or configures the load balance equipment by the service provider, however, the load balance capability of the former one is limited and the cost of the latter one is relatively high.

### Summary of the Invention

The technical problem to be solved in the present invention is to overcome the disadvantages in the related art and to provide a method for implementing a service and a service system, in which the network provider provides the routing services for the service so that the effective load balance can be performed with lower cost and the network provider are facilitated to control services.

To solve the above problem, the present invention provides a method for implementing a service, which comprises:
storing a service node address of a service in a peer-to-peer (P2P) node corresponding to a service identifier of the service in a P2P overlay network,
a user equipment sending a service request including the service identifier to the P2P overlay network after acquiring the service identifier of the service; and
after receiving the service request sent by the user equipment, the P2P node in the P2P overlay network acquiring the service node address of the service from the P2P overlay network according to the service identifier and sending the service request to a corresponding service node according to the service node address.

In addition, the P2P node storing the service node address is a responsible node in the P2P overlay network;
in the step of sending the service request to the P2P overlay network, the user equipment sends the service request to a user access node in the P2P overlay network;
after receiving the service request sent by the user equipment and before the step of the acquiring the service node address of the service, the method further comprises: the user access node sending a P2P acquiring request including the service identifier to the responsible node using a routing algorithm of a P2P protocol to acquire the service node address;
in the step of sending the service request, the user access node sends the service request to the corresponding service node according to the service node address.

In addition, the P2P node storing the service node address is a responsible node in the P2P overlay network;
in the step of sending the service request to the P2P overlay network, the user equipment sends the service request to a user access node in the P2P overlay network;
after receiving the service request sent by the user equipment and before the step of the acquiring the service node address of the service, the method further comprises: the user access node forwarding the service request to the responsible node using a routing algorithm of a P2P protocol;
in the step of sending the service request, the responsible node acquires the service node address stored locally according to the service identifier, and sends the service request to the corresponding service node according to the service node address.

In addition, if a plurality of service node addresses of the service is acquired in the acquiring step, the method further comprises:
the P2P node for sending the service request to the service node selecting one service node address from a plurality of the service node addresses according to a load balance strategy before sending the service request; and
in the step of sending the service request, sending the service request to the service node corresponding to the selected service node address.

In addition, before the step of the user equipment sending the service request to the user access node, the method further comprises:
acquiring a user access node address according to an entrance domain name of the P2P overlay network and selecting one user access node address from a plurality of the acquired user access node addresses according to a preset strategy; and
in the step of sending the service request, sending the service request to the user access node corresponding to the selected user access node address.

In addition, in the step of storing the service node address of the service, a following way is adopted to store the service node address of the service in the P2P overlay network:
the service node sending a service registering request including a service name of the service to a service directory server (SDS);
after receiving the service registering request, the SDS performing a Hash operation to the service name using a Hash algorithm of a P2P protocol to generate the service identifier of the service and sending a P2P storing request including the service identifier and the service node address for storing the service to the P2P overlay network; and
the responsible node corresponding to the service identifier in the P2P overlay network receiving the P2P storing request, and then storing the service node address.

In addition, the method further comprises:
after receiving the service registering request, the SDS starting a keep-alive timer; and
if the SDS receives a registration refreshing request sent by the service node before the keep-alive timer is timeout, then the SDS resetting the keep-alive timer;
if the SDS does not receive the registration refreshing request sent by the service node before the keep-alive timer is timeout, then the SDS sending a P2P deleting request including the service identifier of the service and address information of the service node to the P2P overlay network; and the responsible node deleting the service node address of the service after receiving the P2P deleting request.

In addition, the method further comprises:
after receiving the P2P storing request, the responsible node starting a keep-alive timer; and
after the SDS receiving a registration refreshing request sent by the service node and sending the P2P storing request to the responsible node;
if the responsible node receives the P2P storing request before the keep-alive timer is timeout, then the responsible node resetting the keep-alive timer;
if the responsible node does not receive the P2P storing request before the keep-alive timer is timeout, then the responsible node deleting the service node address of the service.

The present invention further provides a service system, which comprises: a user equipment, a service node and a peer-to-peer (P2P) overlay network, wherein the P2P overlay network comprises a plurality of P2P nodes; wherein
P2P nodes comprise a responsible node, and responsible node is a P2P node corresponding to a service identifier of a service in the P2P overlay network and is configured to store a service node address of the service;
the user equipment is configured to: send a service request including the service identifier to the P2P overlay network after acquiring the service identifier of the service; and
P2P nodes further comprise a user access node, and the user access node is configured to: acquire the service node address of the service from the P2P overlay network according to the service identifier after receiving the service request sent by the user equipment and send the service request to a corresponding service node according to the service node address.

In addition, the user equipment is configured to: send the service request to the user access node in the P2P overlay network;
the user access node is configured to: send a P2P acquiring request including the service identifier to the responsible node using a routing algorithm of a P2P protocol after receiving the service request sent by the user equipment to acquire the service node address.

In addition, the user equipment is configured to: send the service request to the user access node in the P2P overlay network;
the user access node is further configured to: forward the service request to the responsible node using a routing algorithm of a P2P protocol after receiving the service request sent by the user equipment;
the responsible node is further configured to: acquire the service node address stored locally according to the service identifier after receiving the service request forwarded by the user access node, and send the service request to the corresponding service node according to the service node address.

In addition, the user access node is further configured to: select one service node address from a plurality of the acquired service node addresses of the service according to a load balance strategy before sending the service request, and send the service request to the service node corresponding to the selected service node address.

In addition, the system further comprises a service directory server (SDS); wherein the SDS is configured to:
receive a service registering request including a service name of the service sent by the service node; and
perform a Hash operation to the service name using a Hash algorithm of a P2P protocol, generate the service identifier of the service and send a P2P storing request including the service identifier and the service node address to the P2P overlay network;
the responsible node is further configured to: store the service node address after receiving the P2P storing request.

The present invention further provides a user equipment of a service system, which is configured to:
send a service request including a service identifier to a user access node in a peer-to-peer (P2P) overlay network after acquiring the service identifier of a service.

The present invention further provides a peer-to-peer (P2P) overlay network of a service system comprising a plurality of P2P nodes, wherein,

P2P nodes comprise a responsible node, and the responsible node is a P2P node corresponding to a service identifier of a service in the P2P overlay network and is configured to: store a service node address of the service; and

P2P nodes further comprise a user access node, and the user access node is configured to: acquire the service node address of the service from the P2P overlay network according to the service identifier after receiving a service request sent by a user equipment and send the service request to a corresponding service node according to the service node address.

In addition, the user access node is configured to: send a P2P acquiring request including the service identifier to the responsible node using a routing algorithm of a P2P protocol after receiving the service request sent by the user equipment to acquire the service node address.

In addition, the user access node is further configured to: forward the service request to the responsible node using a routing algorithm of a P2P protocol after receiving the service request sent by the user equipment; and
the responsible node is further configured to: acquire the service node address stored locally according to the service identifier after receiving the service request forwarded by the user access node and send the service request to the corresponding service node according to the service node address.

In addition, the responsible node is configured to: store the service node address after receiving a P2P storing request;
wherein the P2P storing request is sent to the P2P overlay network by a service directory server (SDS) after receiving a service registering request sent by the service node and then performing a Hash operation to a service name using a Hash algorithm of a P2P protocol to generate the service identifier of the service, wherein the P2P storing request includes the service identifier and the service node address.

In addition, the user access node is further configured to: select one service node address from a plurality of acquired service node addresses of the service according to a load balance strategy before sending the service request and send the service request to the service node corresponding to the selected service node address.

The present invention further provides a service directory server (SDS) of a service system, which is configured to:
receive a service registering request including a service name of a service sent by a service node; and
perform a Hash operation to the service name using a Hash algorithm of a P2P protocol to generate a service identifier of the service and send a P2P storing request including the service identifier and a service node address to a P2P overlay network.

In conclusion, the present invention stores the service node address of the service in the P2P overlay network and the P2P overlay network forwards the service request sent by the user equipment to the corresponding service node according to the stored service node address, which provides the service routing services based on the P2P overlay network, thereby facilitating to perform the effective load balance by using the characteristic of the P2P overlay network itself and to control the service in the service routing process by the network provider.

### Brief Description of Drawings

FIG. 1 is a structural diagram of the internet service system in the related art;
FIG. 2 is a structural diagram of the service system based on a peer-to-peer overlay network according to an embodiment of the present invention;
FIG. 3 is a flow chart of a service registration method according to an embodiment of the present invention;
FIG. 4 is a flow chart of a service routing method according to an embodiment of the present invention;
FIG. 5 is a flow chart of a method for implementing load balance in a service routing process according to an embodiment of the present invention;
FIG. 6 is a flow chart of a service keep-alive method according to an embodiment of the present invention.

### Preferred Embodiments of the Present Invention

The core idea of the present invention is that the service node registers a service to the peer-to-peer (P2P) overlay network through the service directory server (SDS), so as to store the address information of the service node of this service in the P2P node corresponding to the service identifier of the service; a user equipment initiates a service request including the service identifier to the P2P overlay network after acquiring the service identifier of the service; and the P2P node in the P2P overlay network acquires the address information of the service node from the P2P overlay network according to the service identifier and sends the service request to the service node according to the acquired address information.

The present invention is described in detail with reference to the accompanying drawings and embodiments hereinafter.

FIG. 2 is a structural diagram of the service system based on a peer-to-peer overlay network according to an embodiment of the present invention; the system is used to provide services for UEs; the system comprises service nodes (the service node 1 and service node 2 as shown in FIG. 2) of the service provider, the SDS of the network provider and the peer-to-peer overlay network (also named as the P2P overlay network). In the system,
the SDS is configured to: receive a service registering request including the service name sent by the service node, use a Hash algorithm of the P2P protocol to perform the Hash operation to the service name to generate a service identifier of the service, and send a P2P storing request including the service identifier and the service node address to the P2P overlay network; the responsible node corresponding to the service identifier in the P2P overlay network, after receiving the P2P storing request, stores the service node address.

The UE is configured to: send the service request including the service identifier to the P2P node (the user access node) in the P2P overlay network after receiving the service identifier of the service;
the user access node sends a P2P acquiring request including the service identifier to the responsible node using the routing algorithm of the P2P protocol after receiving the service request sent by the UE to acquire the service node address; the user access node receives the service node address, and then sends the service request to the corresponding service node according to the address; or
the user access node forwards the service request to the responsible node using the routing algorithm of the P2P protocol after receiving the service request sent by the UE; the responsible node receives the service request forwarded by user access node, then acquires the service node address stored locally according to the service identifier, and sends the service request to the corresponding service node according to the address.

The specific functions of above various network elements/P2P nodes will be described in detail in the section for describing the method of the present invention hereinafter.

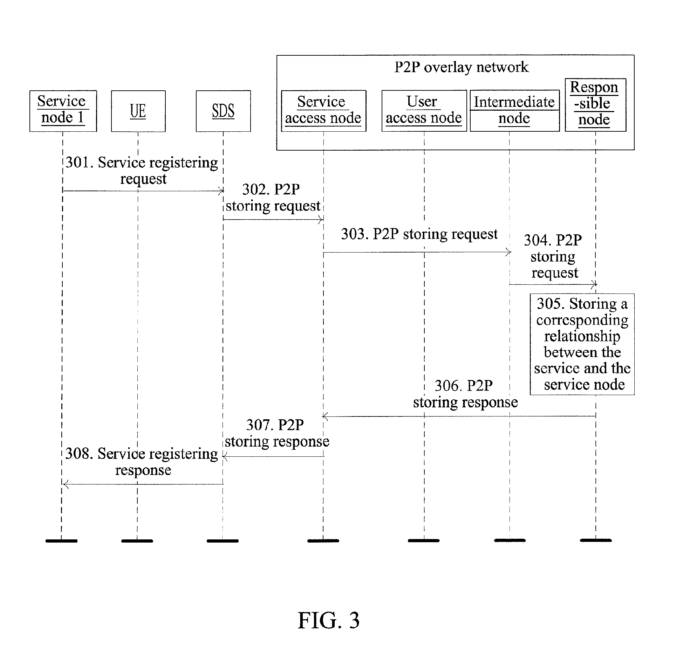

FIG. 3 is a flow chart of a service registration method according to an embodiment of the present invention; the user access node, the service access node, the intermediate node and the responsible node in FIG. 3 are all logical names of the P2P node in the P2P overlay network in FIG. 2 in different scenarios; wherein the node responsible for the user access is called as the user access node, the node responsible for communicating with the service node is called as the service access node, the node responsible for storing the service registration data (for example, the address information of the service node) is called as the responsible node, the node forwarding the message in the P2P overlay network is called as the intermediate node, and subsequent embodiments will all use this naming. The registration method shown in FIG. 3 comprises the following steps.

Step 301, a service node (e.g., the service node 1) initiates a service registering request used for registering the service to the SDS, wherein the service registering request includes the service name of the service to be registered (e.g., service A), the service node address of the service to be registered and the interface description information of the service to be registered.

The above service registering request can be implemented by invoking a World Wide Web (Web) service interface, and also can be implemented by submitting a Web page, or can be implemented using other protocols.

Step 302, the SDS uses a Hash algorithm of a distributed Hash table (DHT) protocol to perform the Hash operation to the service name after receiving the service registering request sent by the service node to generate a service identifier (ID) of the service to be registered; and sends a P2P storing request including the service ID of the service to be registered and the address information of the service node of the service to be registered to the service access node in the P2P overlay network, so as to store the binding relationship between the service to be registered (service A) and the service node (the service node 1) in the P2P overlay network;
furthermore, in this step, the SDS is also required to record the service name and the interface description information included in the service registering request, so as to generate the service directory.

It should be noted that the service name of the service A must be transformed into the Hashed ID value in the P2P overlay network, so that the P2P overlay network searches the responsible node corresponding to the ID value.

Steps 303∼304, the service access node in the P2P overlay network receives the P2P storing request sent by the SDS, and then uses a routing algorithm to send the P2P storing request to the responsible node corresponding to the service ID of the service A in the P2P overlay network through zero, one or more intermediate nodes according to the service ID of the service A included in the P2P storing request.

It should be noted that the DHT protocol includes various routing algorithms, such as the CHORD routing algorithm, etc.. If the CHORD routing algorithm is used, then each P2P node is required to maintain a routing table, and the corresponding storage node (i.e., the responsible node in the present embodiment) can be found according to the routing table for any given ID value.

Step 305, the responsible node stores the binding relationship between the service A and the service node 1 (i.e., the binding relationship between the service ID of the service A and the address information of the service node 1) after receiving the P2P storing request, and duplicates the above binding relationship data to the relevant P2P node (also called as the backup node) according to the P2P backup algorithm of the DHT protocol.

It should be noted that the DHT protocol includes various backup algorithms, such as the CHORD backup algorithm, etc.. The CHORD backup algorithm is to determine the backup relationship between various P2P nodes according to the magnitude of the node ID of the P2P node. The backup node of a P2P node refers the nearest P2P node whose the node ID is larger than the node ID of the P2P node.

Steps 306∼307, the responsible node sends a P2P storing success response which is routed to the SDS through the intermediate node and the service access node.

Step 308, the SDS receives the P2P storing success response, and then transforms the P2P storing success response to the service registering success response to send to the service node 1, and the service node 1 acquires that the service A is registered successfully.

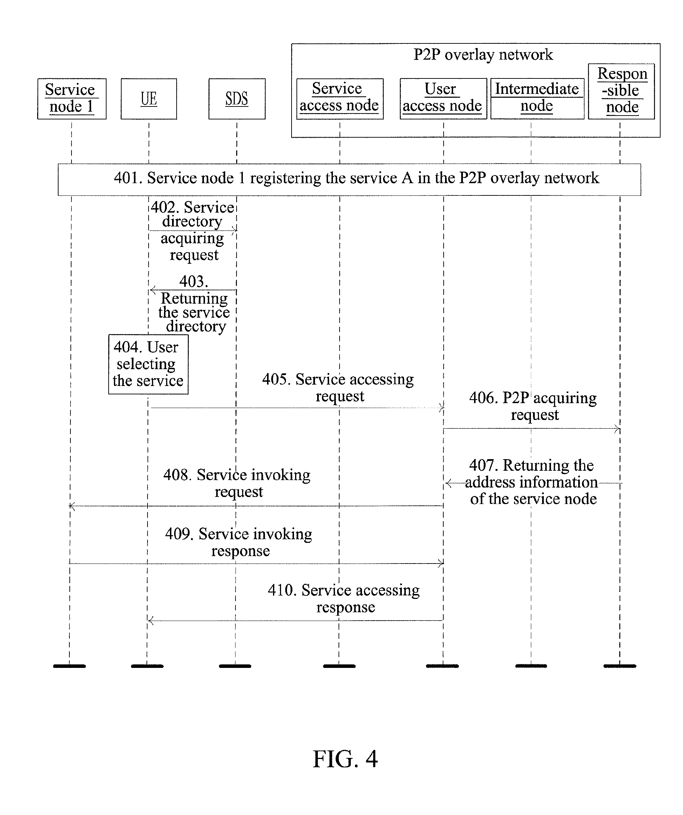

FIG. 4 is a flow chart of a service routing method according to an embodiment of the present invention, and the method comprises the following steps.

Step 401, the service node 1 successfully registers the service A in the P2P overlay network (that is, successfully storing the service ID of the service A and the address information of the service node of the service A into the responsible node corresponding to the service ID in the P2P overlay network) using the method shown in FIG. 3.

Steps 402∼403, the UE sends a service directory acquiring request to the SDS of the network provider so as to acquire the service directory, and the SDS returns the service directory.

In the present embodiment, the SDS acts as a service server to receive the service directory acquiring request sent by the UE/user and to provide the service directory for the UE.

The UE can send the service directory acquiring request to the SDS through the browser so as to acquire the service directory, or send the service directory acquiring request through the Web service interface customized by the network provider or using other ways to acquire the service directory.

The service directory includes the following information: the service name, the interface description information of the service, and the entrance domain name of the P2P overlay network, etc..

The interface description information of the service can be provided in a form of the web service description language (WSDL).

In the present embodiment, assuming that the UE has already joined in the P2P overlay network corresponding to the entrance domain name of the P2P overlay network, the UE can acquire the addresses of one or more user access nodes in the P2P overlay network by using the domain name.

Step 404, the UE presents the service directory to the user in the Web page or the menu, and the user selects the service which he/she wants to access (service A in the present embodiment).

Step 405, the UE performs the Hash operation to the service name of the service A using the Hash algorithm of the DHT protocol to generate the service ID of the service A; generates the service invoking request message according to the interface description information of the service A, and includes the generated service invoking request message and the service ID of the service A in the service accessing request to send to the user access node in the P2P overlay network.

It should be noted that if the UE acquired a plurality of addresses of the user access nodes through the entrance domain name of the P2P overlay network, the UE can select a user access node using the preset strategy (such as random selection, or selection in turn) and sends the above service accessing request to the selected user access node so as to acquire the effect of load balance in this step.

Steps 406∼407, the user access node receives the service accessing request, and then uses a routing algorithm of the DHT protocol to send the P2P acquiring request to the responsible node corresponding to the service ID by according to the service ID included in the service access request to acquire the address information of the service node (the service node 1 in the present embodiment) according to the service ID; the responsible node receives the P2P acquiring request, then extracts the address information of the service node 1 corresponding to the responsible node according to the service ID included in the P2P acquiring request, and returns the address information of the service node 1 to the user access node.

The above P2P acquiring request may reach the responsible node through zero, one or more intermediate nodes in the P2P overlay network, and each intermediate node received the P2P acquiring request routes and forwards the P2P acquiring request using the routing algorithm of the DHT protocol according to the service ID and finally forwards the P2P acquiring request to the corresponding responsible node.

Step 408, the user access node forwards the service invoking request message included in the service accessing request to the service node 1 after acquiring the address information of the service node 1.

It should be noticed that the user access node can temporarily store the binding relationship between the service ID of the service A and the address information of the service node 1 after acquiring the address information of the service node 1, so that it is not required to search the address information of the service node 1 again when receiving the subsequent requests of the service.

Step 409, the service node 1 performs the corresponding process to the service invoking request message, and then returns the service invoking response to the user access node.

Step 410, the user access node returns the service accessing response to the UE.

According to the basic principle of the present invention, the above embodiment can also have various transformations, for example:
➢ the user access node can perform the service control operations, such as service authorization, and charging, etc., to the access of the UE. The means of charging can use that in the related art, for example, the service access detail message is sent to the charging data server using the Diameter protocol and the backend charging system of the operator performs the pricing and charging to the access record.

Certainly, the user access node can also select different service control triggering times (such as, charging triggering time) according to the charging strategy of the operator, for example, charging is performed when receiving the service accessing request rather than starting the charging until receiving the service invoking response.
➢ In the above embodiment, the user access node is responsible for acquiring the address information of the service node 1 and forwards the service invoking request message to the service node 1; in other embodiments of the present invention, the user access node can also forwards the received service accessing request through zero, one or more intermediate nodes to the responsible node using the routing algorithm of the DHT protocol according to the service ID, and the responsible node forwards the service invoking request message. In this case, the responsible node also can execute the necessary service control operations (authorization, and charging, etc.).

The required strategy data for performing the above service control is the rule defined by the operator and is stored in the P2P overlay network, and can be read and executed by the forwarding node (i.e., the user access node or the responsible node) of the service invoking request message.
➢ In the above embodiment, the UE includes the generated service invoking request message and the service ID in the service accessing request to send to the P2P overlay network. The P2P overlay network acquires the address information of the service node, then extracts the service invoking request message in the service accessing request and forwards the service invoking request message to the corresponding service node. While in the other embodiments of the present invention, the service accessing request sent by the UE and the service invoking request forwarded to the service node by the P2P overlay network can be the same, which are collectively called as the service request, and the request includes the service ID.

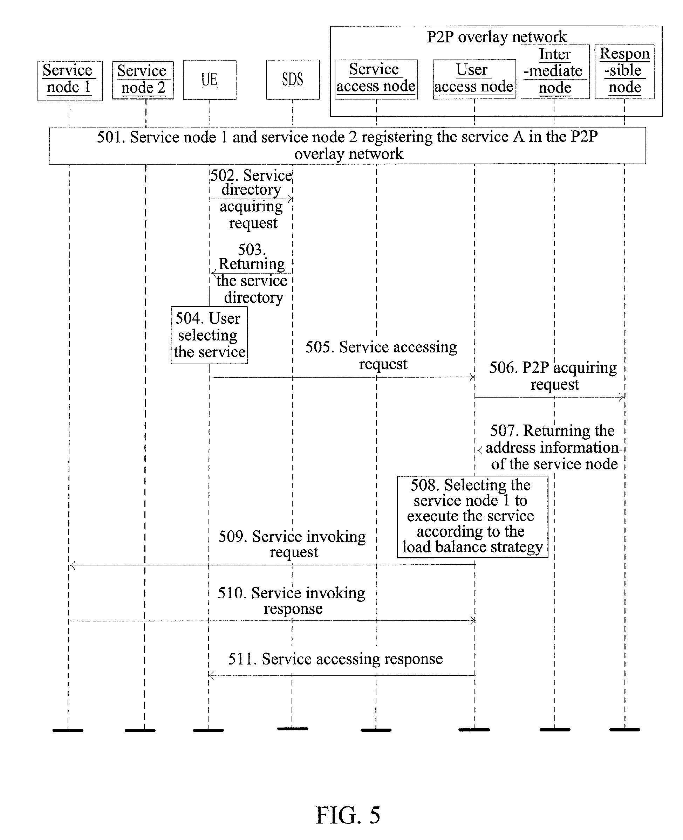

FIG. 5 is a flow chart of a method for implementing load balance in a service routing process according to an embodiment of the present invention, and the method comprises the following steps.

Step 501, both the service node 1 and service node 2 register their provided service A to the P2P overlay network through the SDS using the service registration method shown in FIG. 3; the P2P overlay network records the binding relationship between the service A and the service node 1 as well as service node 2 (that is, the P2P overlay network records the binding relationship between the service ID of the service A and the address information of the service node 1 and the service node 2).

Steps 502∼507 are similar as steps 402∼407; wherein, in step 507, the user access node acquires the address information of the service node 1 and the service node 2 from the responsible node.

Step 508, the user access node selects the service node 1 from the service node 1 and the service node 2 to execute the service A according to the load balance strategy.

Steps 509∼511 are the same as steps 408∼410.

According to the basic principle of the present invention, the embodiment shown in FIG. 5 can also have a plurality of extensions and transformations, for example:
➢ in the service registration procedure of step 501, the service node can include the self-defined load balance strategy in the service registering request to sends to the P2P overlay network through the SDS; the P2P overlay network can store the load balance strategy and the service node address, acting as the service registration data together, in the responsible node; in step 508, the user access node acquires the load balance strategy and the service node address, and then selects the service node according to the load balance strategy.
➢ The above load balance strategy can be the Hash modulus method, for example, performing the Hash operation to the ID of the user who initiates the service request to obtain the Hash value H, then calculating K=H mod N, and taking the service node with the serial number of K as the finally selected service node; wherein N is the total of the service nodes and "mod" represents the modulus operation.

Furthermore, the load balance strategy can also be a section of pseudo codes which can be analyzed and executed by the user access node and are used for the load balance (that is, selecting the service node).

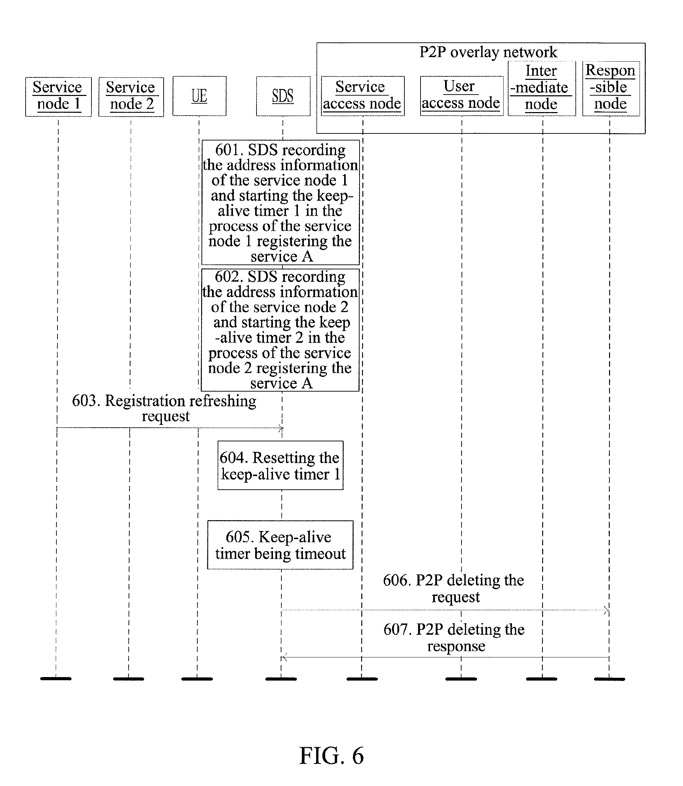

FIG. 6 a flow chart of a service keep-alive method according to an embodiment of the present invention, and the method comprises the following steps.

Step 601, the service node 1 registers the service A to the P2P overlay network through the SDS using the registration method shown in FIG. 3; in the process of the service node 1 registering the service A, the SDS records the service ID of the service A (or the name of the service A) and the address information of the service node 1, and starts the keep-alive timer 1 for the service A registered by the service node 1.

The SDS can start the keep-alive timer 1 after receiving the service registering request sent by the service node 1 (referring to the description in step 301), or after receiving the P2P storing success response forwarded by the service access node (referring to the description in step 307), or after receiving the above service registering request and before receiving the above P2P storing success response.

Step 602, the service node 2 registers the service A to the P2P overlay network through the SDS using the registration method shown in FIG. 3; in the process of the service node 2 registering the service A, the SDS records the service ID of the service A (or the name of the service A) and the address information of the service node 2, and starts the keep-alive timer 2 for the service A registered by the service node 2.

Similarly, the SDS can start the keep-alive timer 2 after receiving the service registering request sent by the service node 2, or after receiving the P2P storing success response forwarded by the service access node, or after receiving the above service registering request and before receiving the above P2P storing success response.

Steps 603∼604, the service node 1 sends the registration refreshing request (also can be called the keep-alive request) including the service name (the name of the service A in the present embodiment) to the SDS before the keep-alive timer 1 is timeout; the SDS resets the keep-alive timer 1 and restarts timing for the service A registered by the service node 1.

Step 605, the service node 2 cannot send the service registration refreshing request (the service keep-alive request) before the keep-alive timer 2 is timeout due to the reasons such as being down, etc., and the keep-alive timer 2 is timeout.

Step 606, the SDS extracts the previously stored service ID of service A (or the service ID of the service A generated according to the stored name of the service A using the method same as step 302), and sends the P2P deleting request including the service ID of service A and the address information of service node 2 to the P2P overlay network (such as the service access node in the P2P overlay network) so as to delete the binding relationship between the service node 2 and the service ID of the service A stored in the P2P overlay network; the above P2P deleting request is sent to the responsible node corresponding to the service ID of the service A through one or more P2P nodes in the P2P overlay network.

The SDS can send the above P2P deleting request to any P2P node in the P2P overlay network; the P2P node in the P2P overlay network sends the P2P deleting request to the corresponding responsible node using the routing algorithm of the DHT protocol according to the service ID.

Step 607, the responsible node receives the P2P deleting request, then deletes the locally stored binding relationship data between the service node 2 and the service A according to the service ID of the service A and the address information of the service node 2 included in the P2P deleting request, deletes the corresponding backup data, and returns the P2P deleting response to the SDS.

After that, when the UE accesses the service A, the P2P overlay network will no longer select the service node 2, thereby avoiding the service access failure.

According to the basic principle of the present invention, the embodiment shown in FIG. 6 can also have a plurality of transformations, for example:
➢ in other embodiments of the present invention, a keep-alive timer also can be set by the responsible node for the service registered by the service node in the service registration process, and the SDS sends the P2P storing request including the service ID of the service to be refreshed and the address information of the service node to the P2P overlay network after receiving the registration refreshing request (keep-alive request) sent by the service node; the P2P overlay network forwards the above P2P storing request to the responsible node, and the responsible node resets the corresponding keep-alive timer after receiving the P2P storing request; if the responsible node does not receive the P2P storing request before the keep-alive timer is timeout, the responsible node deletes the binding relationship between the service and the service node.

The present invention further provides a user equipment of the service system, wherein,
the user equipment is configured to: send a service request including the service identifier to the user access node in the P2P overlay network after acquiring a service identifier of the service.

The present invention also provides a P2P overlay network of the service system, and the P2P overlay network comprises a plurality of P2P nodes,
the P2P node comprises a responsible node, which is a P2P node corresponding to the service identifier of the service in the P2P overlay network and is configured to: store the service node address of the service;
the P2P node further comprises a user access node, which is configured to: acquire the service node address of the service from the P2P overlay network according to the service identifier after receiving the service request sent by the user equipment and send the service request to the corresponding service node according to the service node address.

Furthermore, the user access node is configured to: use a routing algorithm of the P2P protocol to send the P2P acquiring request including the service identifier to the responsible node after receiving the service request sent by the user equipment to acquire the service node address.

Furthermore, the user access node is further configured to: forward the service request to the responsible node using the routing algorithm of the P2P protocol after receiving the service request sent by the user equipment;
the responsible node is further configured to: acquire the locally stored service node address according to the service identifier after receiving the service request forwarded by the user access node, and send the service request to the corresponding service node according to the service node address.

Furthermore, the responsible node is configured to: store the service node address after receiving the P2P storing request;
wherein the P2P storing request is sent to the P2P overlay network by the service directory server (SDS) after receiving the service registering request sent by the service node and then performing the Hash operation to the service name using the Hash algorithm of the P2P protocol to generate the service identifier of the service, wherein the P2P storing request includes the service identifier and the service node address.

Furthermore, the user access node is further configured to: select one service node address from a plurality of service node addresses of the acquired service according to the load balance strategy before sending the service request, and send the service request to the service node corresponding to the selected service node address.

The present invention further provides a service directory server (SDS) of the service system, wherein,
the SDS is configured to: receive the service registering request including the service name of the service sent by the service node;
perform the Hash operation to the service name using the Hash algorithm of the P2P protocol, generate the service identifier of the service, and send the P2P storing request including the service identifier and the service node address to the P2P overlay network.

It should be noted that each above embodiment describes the method for implementing the service of the present invention taking the DHT protocol as an example, but actually the method for implementing the service of the present invention is also applied to the P2P overlay network using other peer-to-peer (P2P) protocols.

### Industrial Applicability

The present invention stores the service node address of the service in the P2P overlay network and the P2P overlay network forwards the service request sent by the user equipment to the corresponding service node according to the stored service node address, which provides the service routing services based on the P2P overlay network, thereby facilitating to perform the effective load balance using the characteristic of the P2P overlay network itself and to control the service in the service routing process by the network provider.

## Claims

1. A method for implementing a service comprising:
storing a service node address of a service in a peer-to-peer (P2P) node corresponding to a service identifier of the service in a P2P overlay network,
a user equipment sending a service request including the service identifier to the P2P overlay network after acquiring the service identifier of the service; and
after receiving the service request sent by the user equipment, the P2P node in the P2P overlay network acquiring the service node address of the service from the P2P overlay network according to the service identifier and sending the service request to a corresponding service node according to the service node address.

2. The method according to claim 1, wherein
the P2P node storing the service node address is a responsible node in the P2P overlay network;
in the step of sending the service request to the P2P overlay network, the user equipment sends the service request to a user access node in the P2P overlay network;
after receiving the service request sent by the user equipment and before the step of the acquiring the service node address of the service, the method further comprises: the user access node sending a P2P acquiring request including the service identifier to the responsible node using a routing algorithm of a P2P protocol to acquire the service node address;
in the step of sending the service request, the user access node sends the service request to the corresponding service node according to the service node address.

3. The method according to claim 1, wherein
the P2P node storing the service node address is a responsible node in the P2P overlay network;
in the step of sending the service request to the P2P overlay network, the user equipment sends the service request to a user access node in the P2P overlay network;
after receiving the service request sent by the user equipment and before the step of the acquiring the service node address of the service, the method further comprises: the user access node forwarding the service request to the responsible node using a routing algorithm of a P2P protocol;
in the step of sending the service request, the responsible node acquires the service node address stored locally according to the service identifier, and sends the service request to the corresponding service node according to the service node address.

4. The method according to claim 1, if a plurality of service node addresses of the service is acquired in the acquiring step, further comprising:
the P2P node for sending the service request to the service node selecting one service node address from a plurality of the service node addresses according to a load balance strategy before sending the service request; and
in the step of sending the service request, sending the service request to the service node corresponding to the selected service node address.

5. The method according to claim 2 or 3, before the step of the user equipment sending the service request to the user access node, further comprising:
acquiring a user access node address according to an entrance domain name of the P2P overlay network and selecting one user access node address from a plurality of the acquired user access node addresses according to a preset strategy; and
in the step of sending the service request, sending the service request to the user access node corresponding to the selected user access node address.

6. The method according to claim 1, wherein in the step of storing the service node address of the service, a following way is adopted to store the service node address of the service in the P2P overlay network:
the service node sending a service registering request including a service name of the service to a service directory server (SDS);
after receiving the service registering request, the SDS performing a Hash operation to the service name using a Hash algorithm of a P2P protocol to generate the service identifier of the service and sending a P2P storing request including the service identifier and the service node address for storing the service to the P2P overlay network; and
the responsible node corresponding to the service identifier in the P2P overlay network receiving the P2P storing request, and then storing the service node address.

7. The method according to claim 6, further comprising:
after receiving the service registering request, the SDS starting a keep-alive timer; and
if the SDS receives a registration refreshing request sent by the service node before the keep-alive timer is timeout, then the SDS resetting the keep-alive timer;
if the SDS does not receive the registration refreshing request sent by the service node before the keep-alive timer is timeout, then the SDS sending a P2P deleting request including the service identifier of the service and address information of the service node to the P2P overlay network; and the responsible node deleting the service node address of the service after receiving the P2P deleting request.

8. The method according to claim 6, further comprising,
after receiving the P2P storing request, the responsible node starting a keep-alive timer; and
after the SDS receiving a registration refreshing request sent by the service node and sending the P2P storing request to the responsible node;
if the responsible node receives the P2P storing request before the keep-alive timer is timeout, then the responsible node resetting the keep-alive timer;
if the responsible node does not receive the P2P storing request before the keep-alive timer is timeout, then the responsible node deleting the service node address of the service.

9. A service system comprising: a user equipment, a service node and a peer-to-peer (P2P) overlay network, wherein the P2P overlay network comprises a plurality of P2P nodes; wherein,
P2P nodes comprise a responsible node, and responsible node is a P2P node corresponding to a service identifier of a service in the P2P overlay network and is configured to store a service node address of the service;
the user equipment is configured to: send a service request including the service identifier to the P2P overlay network after acquiring the service identifier of the service; and
P2P nodes further comprise a user access node, and the user access node is configured to: acquire the service node address of the service from the P2P overlay network according to the service identifier after receiving the service request sent by the user equipment and send the service request to a corresponding service node according to the service node address.

10. The system according to claim 9, wherein
the user equipment is configured to: send the service request to the user access node in the P2P overlay network;
the user access node is configured to: send a P2P acquiring request including the service identifier to the responsible node using a routing algorithm of a P2P protocol after receiving the service request sent by the user equipment to acquire the service node address.

11. The system according to claim 9, wherein
the user equipment is configured to: send the service request to the user access node in the P2P overlay network;
the user access node is further configured to: forward the service request to the responsible node using a routing algorithm of a P2P protocol after receiving the service request sent by the user equipment;
the responsible node is further configured to: acquire the service node address stored locally according to the service identifier after receiving the service request forwarded by the user access node, and send the service request to the corresponding service node according to the service node address.

12. The system according to claim 9, wherein
the user access node is further configured to: select one service node address from a plurality of the acquired service node addresses of the service according to a load balance strategy before sending the service request, and send the service request to the service node corresponding to the selected service node address.

13. The system according to claim 9, further comprising a service directory server (SDS); wherein
the SDS is configured to:
receive a service registering request including a service name of the service sent by the service node; and
perform a Hash operation to the service name using a Hash algorithm of a P2P protocol, generate the service identifier of the service and send a P2P storing request including the service identifier and the service node address to the P2P overlay network;
the responsible node is further configured to: store the service node address after receiving the P2P storing request.

14. A user equipment of a service system, which is configured to:
send a service request including a service identifier to a user access node in a peer-to-peer (P2P) overlay network after acquiring the service identifier of a service.

15. A peer-to-peer (P2P) overlay network of a service system comprising a plurality of P2P nodes, wherein,
P2P nodes comprise a responsible node, and the responsible node is a P2P node corresponding to a service identifier of a service in the P2P overlay network and is configured to: store a service node address of the service; and
P2P nodes further comprise a user access node, and the user access node is configured to: acquire the service node address of the service from the P2P overlay network according to the service identifier after receiving a service request sent by a user equipment and send the service request to a corresponding service node according to the service node address.

16. The P2P overlay network according to claim 15, wherein
the user access node is configured to: send a P2P acquiring request including the service identifier to the responsible node using a routing algorithm of a P2P protocol after receiving the service request sent by the user equipment to acquire the service node address.

17. The P2P overlay network according to claim 15, wherein
the user access node is further configured to: forward the service request to the responsible node using a routing algorithm of a P2P protocol after receiving the service request sent by the user equipment; and
the responsible node is further configured to: acquire the service node address stored locally according to the service identifier after receiving the service request forwarded by the user access node and send the service request to the corresponding service node according to the service node address.

18. The P2P overlay network according to claim 15, wherein
the responsible node is configured to: store the service node address after receiving a P2P storing request;
wherein the P2P storing request is sent to the P2P overlay network by a service directory server (SDS) after receiving a service registering request sent by the service node and then performing a Hash operation to a service name using a Hash algorithm of a P2P protocol to generate the service identifier of the service, wherein the P2P storing request includes the service identifier and the service node address.

19. The P2P overlay network according to claim 15, wherein
the user access node is further configured to: select one service node address from a plurality of acquired service node addresses of the service according to a load balance strategy before sending the service request and send the service request to the service node corresponding to the selected service node address.

20. A service directory server (SDS) of a service system, which is configured to:
receive a service registering request including a service name of a service sent by a service node; and
perform a Hash operation to the service name using a Hash algorithm of a P2P protocol to generate a service identifier of the service and send a P2P storing request including the service identifier and a service node address to a P2P overlay network.
